# EUROPÄISCHE PATENTSCHRIFT

(11) **EP 2 165 080 B1**
(45) Veröffentlichungstag und Bekanntmachung des Hinweises auf die Patenterteilung: **13.04.2016**
(21) Anmeldenummer: 08774946.1
(22) Anmeldetag: 09.07.2008
(51) Int. Cl.: F04D 29/66, F01D 9/02, F02C 6/12

(54) **DIFFUSOR FÜR RADIALVERDICHTER**
DIFFUSER FOR RADIAL COMPRESSORS
DIFFUSEUR POUR COMPRESSEUR RADIAL

(30) Priorität: 12.07.2007 EP 07112348
(43) Veröffentlichungstag der Anmeldung: 24.03.2010
(73) Patentinhaber: ABB Turbo Systems AG, 5400 Baden (CH)
(72) Erfinder: RODUNER, Christian, CH-5400 Baden (CH); PHILLIPSEN, Bent, CH-5406 Baden-Rütihof (CH); ROBINSON, Douglas, CH-8953 Dietikon (CH)
(74) Vertreter: ABB Patent Attorneys
(86) Internationale Anmeldenummer: PCT/EP2008/058941
(87) Internationale Veröffentlichungsnummer: WO 2009/007404

(56) Entgegenhaltungen:
- EP-A- 1 731 070
- DE-A1- 19 502 808
- DE-A1-102005 011 482
- US-A- 3 006 603
- US-A- 3 873 231
- US-A1- 2004 244 962

## Beschreibung

### Technisches Gebiet

Die Erfindung bezieht sich auf das Gebiet der Abgasturbolader für aufgeladene Brennkraftmaschinen. Sie betrifft den Abströmbereich eines Radialverdichters solcher Abgasturbolader, also den Bereich eines Radialverdichters, welcher stromab des Verdichterrades angeordnet ist und in der Regel einen beschaufelten Diffusor sowie ein asymmetrisch ausgebildetes Spiralgehäuse umfasst.

In modernen Turboladern werden zur Erhöhung des Ansaugdrucks des Motors in der Regel einstufige Radialverdichter mit beschaufelten Diffusoren eingesetzt. Im Diffusor wird die kinetische Energie des zu verdichtenden Mediums in statischen Druck umgewandelt. Die Verdichterräder umfassen eine bestimmte Anzahl Laufschaufeln und die Diffusoren weisen Leitschaufeln mit prismatischen, in der Regel aerodynamischen Profilen (Keil- oder Tragflächenform) auf. In Richtung der Verdichterachse betrachtet haben die Leitschaufeln einen bestimmten tangentialen Winkel an der Eintrittskante (Eintrittswinkel), einen bestimmten tangentialen Winkel an der Austrittskante (Austrittswinkel) sowie einen bestimmten Winkelabstand in Umfangsrichtung zwischen jeweils zwei benachbart zueinander angeordneten Leitschaufeln.

Bei der Auslegung von Verdichterstufen muss stets ein Kompromiss zwischen der aerodynamischen Performance, der mechanischen Auslastung und der Lärmbildung durch den Verdichter gefunden werden. Moderne Verdichterstufen mit hohen spezifischen Schluckvermögen haben lange, dünne Laufschaufeln, deren Eigenformen bei niedrigen Frequenzen auftreten und sich leicht anregen und in Schwingung versetzen lassen. Eine Hauptquelle dieser Anregungen ist ein durch die Leitschaufeln des Diffusors erzeugtes Druckpotenzialfeld. Aufgrund der geometrisch regelmässig ausgebildeten Verdichterlauf- und Diffusorleitschaufeln kann es zu Resonanzschwingungen kommen, die mit erhöhter Schwingungsenergie wirksam werden. Aufgrund der für das Erreichen des Austrittdrucks erforderlichen hohen Drehzahl können die Schwingungen im Extremfall in den Verdichterlaufschaufeln zu mechanischen Schäden führen (high cycle fatigue - HCF).

### Stand der Technik

EP 1 772 596 offenbart einen zweistufigen Diffusor eines Axialverdichters, bei welchem je eine Diffusorschaufelreihe vor und nach den axial durchströmten Laufschaufeln des Verdichters angeordnet sind. Die Diffusorschaufelreihen weisen je in einer unteren und einer oberen Hälfte eine unterschiedliche Anzahl Leitschaufeln auf, um durch die ungleiche Schaufeldichte den Schwingungseinfluss auf die zwischen den Diffusorschaufelreihen angeordneten Laufschaufeln zu reduzieren. Die Durchströmung erfolgt in axialer Richtung, wobei die Strömungsverhältnisse vor und nach dem dargestellten, zweistufigen Diffusor entlang dem Umfang symmetrisch sind. Solche symmetrischen Strömungsverhältnisse sind erforderlich, da axial stromab des Diffusors die Axialturbine angeordnet ist, welcher eine entlang dem Umfang möglichst symmetrische Strömung zugeführt werden soll.

US 3 873 231 offenbart eine Flüssigkeitspumpe mit einem Laufrad mit einer Vielzahl von Schaufeln und mehreren entlang dem Umfang verteilt angeordneten Leitschaufeln. Die Leitschaufeln weisen dabei eine ungleiche Verteilung entlang des Umfangs auf, um konstante Druckmuster in der zu befördernden Flüssigkeit vermeiden zu können.

### Kurze Darstellung der Erfindung

Die Aufgabe der vorliegenden Erfindung besteht darin, den Abströmbereich eines Radialverdichter dahingehend zu verbessern, dass der Diffusor im Zusammenspiel mit dem stromab der Leitschaufeln des Diffusors angeordneten, asymmetrisch ausgebildeten Spiralgehäuse sowie den Laufschaufeln des Radialverdichterrades möglichst geringe Resonanzschwingungen hervorbringt.

Erfindungsgemäss wird dies erreicht, indem Mittel zur Positionierungs des beschaufelten Diffusors bezüglich der Winkellage des asymmetrisch ausgebildeten Spiralgehäuses vorgesehen sind.

Dabei können in einer Ausführungsform einzelne Leitschaufelpaare einen von den übrigen Leitschaufelpaaren abweichenden Winkelabstand aufweisen.

Optional können in einer weiteren Ausführungsform mehrere nebeneinander, oder regelmässig oder unregelmässig entlang dem Umfang verteilt angeordnete Leitschaufelpaare jeweils den gleichen aber vom Winkelabstand der restlichen Leitschaufelpaar verschiedenen Winkelabstand aufweisen.

Optional können in einer weiteren Ausführungsform mehrere Gruppen von Leitschaufelpaaren jeweils den gleichen Winkelabstand aufweisen. Diese die Leitschaufelpaare solcher Gruppen können aneinander angrenzend oder über den Umfang verteilt angeordnet sein.

Optional können in einer weiteren Ausführungsform alle Leitschaufelpaare einen unterschiedlichen Winkelabstand aufweisen.

Form, Länge, Eintritts- und Austrittswinkel sowie Eintritts- und Austrittsradius der Leitschaufeln können - bezüglich der Verdichterachse - in axialer Richtung wie auch in Umfangsrichtung für alle Leitschaufeln gleich oder für einige oder alle Leitschaufeln unterschiedlich sein.

Solche erfindungsgemäss unregelmässig ausgebildete Diffusoren können in ein- oder mehrstufiger Form ausgebildet sein, wobei bei mehreren Stufen diese in radialer Richtung hintereinander, also konzentrisch bezüglich der Verdichterachse, angeordnet sind.

Weitere Vorteile ergeben sich aus den abhängigen Ansprüchen.

### Kurze Beschreibung der Zeichnungen

Nachfolgend werden anhand der Figuren Ausführungsformen des erfindungsgemäss ausgebildeten Diffusors eines Radialverdichters beschrieben. Dabei zeigt:
- Fig. 1: einen Schnitt entlang der Verdichterachse durch einen Radialverdichter mit einem beschaufelten Diffusor,
- Fig. 2: einen Schnitt senkrecht zur Verdichterachse durch eine erste Ausführungsform eines erfindungsgemäss ausgebildeten Diffusors mit unregelmässig angeordneten Leitschaufeln,
- Fig. 3: einen Schnitt senkrecht zur Verdichterachse durch eine zweite Ausführungsform eines erfindungsgemäss ausgebildeten Diffusors mit in Umfangsrichtung alternierenden Winkelabständen zwischen den jeweils benachbart zueinander angeordneten Leitschaufel, und
- Fig. 4: eine einzelne Leitschaufel eines Diffusors nach einer der vorangehenden Figuren.

### Weg zur Ausführung der Erfindung

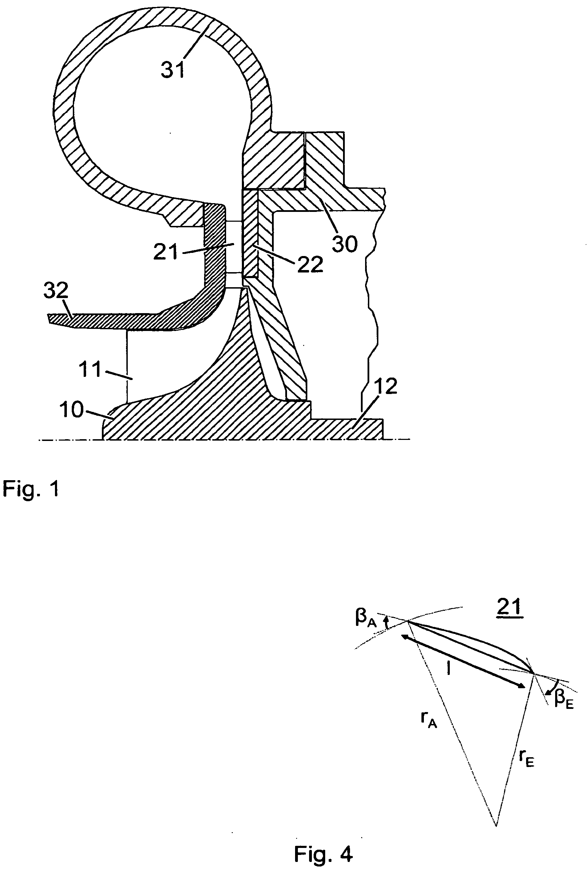

Fig. 1 zeigt den Verdichterteil eines Abgasturboladers im Schnitt durch die Wellenachse. Der Verdichter umfasst ein auf der Welle 12 angeordnetes Verdichterrad, welches eine Nabe 10 und darauf angeordneten Laufschaufeln 11 umfasst. Die Laufschaufeln können in Haupt- und Zwischenschaufeln unterteilt sein, wobei sich die Hauptschaufeln über dich gesamte Länge des von der Nabe und dem angrenzenden Gehäuseteils begrenzten Strömungskanals erstrecken, während die Zwischenschaufeln in der Regel verkürzt ausgebildet sind und eine zurückversetzte Eintrittskante aufweisen. Dabei können eine oder mehrere Zwischenschaufeln pro Hauptschaufel angeordnet sein. Das Verdichterrad ist im Verdichtergehäuse angeordnet, welches in der Regel mehrere Teile umfasst, etwa das Spiralgehäuse 31 und das Eintrittsgehäuse 32. Zwischen dem Verdichter und der nicht dargestellten Turbine befindet sich das Lagergehäuse 30, welches die Lagerung der Welle beinhaltet. Der bereits erwähnte Strömungskanal im Bereich des Verdichters wird durch das Verdichtergehäuse begrenzt. Im Bereich des Verdichterrades übernimmt die Nabe des Verdichterrades die radial innere Begrenzung, wobei die Laufschaufeln des Verdichterrades im Strömungskanal angeordnet sind. In Strömungsrichtung des zu verdichtenden Mediums stromab des Verdichterrades ist der Diffusor angeordnet. Der Diffusor dient, wie eingangs erwähnt, der Verlangsamung der durch das Verdichterrad beschleunigten Strömung. Dies erfolgt einerseits durch die Leitschaufeln 21 des Diffusors, andererseits durch das Spiralgehäuse, von wo aus das verdichtete Medium den Brennkammern einer Brennkraftmaschine zugeführt wird. Die Leitschaufeln des Diffusors sind ein- oder beidseitig des Strömungskanals mit einer Diffusor-Wand 22, einem Gehäuseteil, verbunden.

Der erfindungsgemässe Diffusor weist mehrere Leitschaufeln auf. Die Leitschaufeln weisen unterschiedliche Winkelabstände voneinander auf. Als Winkelabstand im Sinne dieser Anmeldung wird der Winkel zwischen den Eintrittskanten zweier benachbart zueinander angeordneten Leitschaufeln bezeichnet. Optional kann als Winkelabstand auch der Winkel zwischen zwei anderen, sich entsprechenden Punkten zweier benachbart zueinander angeordneter Leitschaufeln bezeichnet werden, dann etwa, wenn die Leitschaufeln unterschiedlich ausgebildete Eintrittswinkel aufweisen, oder die Eintrittskanten sich auf unterschiedlichen Radien befinden. In diesem Fall kann als Winkelabstand etwa der Winkel zwischen den Austrittskanten oder der Winkel zwischen den Profilmittelpunkten bezeichnet werden.

Erfindungsgemäss sind die Winkelabstände zwischen benachbart zueinander angeordneten Leitschaufeln nicht über den gesamten Umfang identisch. Dabei gibt es mehrere Möglichkeiten, Diffusoren mit variierenden Winkelabständen zwischen den Leitschaufeln zu realisieren:

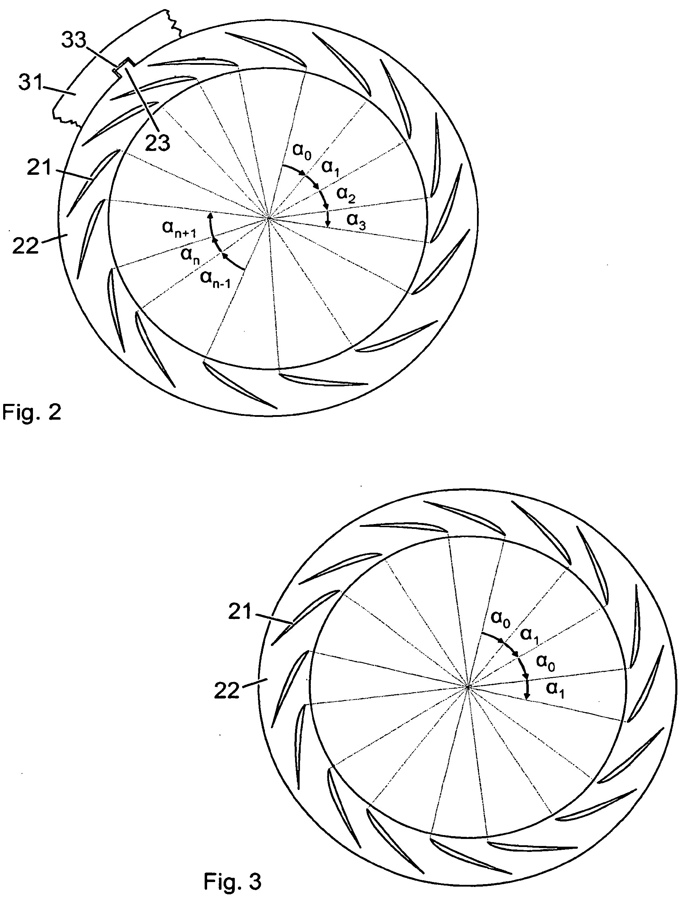

In einer ersten Ausführungsform gemäss Fig. 2 sind die Winkelabstände αₓ für alle Paare von benachbart zueinander angeordneten Leitschaufeln 21 des Diffusors unterschiedlich, das heisst keine zwei der sechzehn Winkelabständen zwischen den sechzehn Leitschaufelpaaren sind identisch. Die Werte für die einzelnen Winkelabstände der beispielhaft dargestellten Ausführungsform nach Fig. 2 können der folgenden Tabelle entnommen werden:

**Tabelle 1 - Winkelabstände Fig. 2**

| | |
|---|---|
| α₀ | 25° |
| α₁ | 21° |
| α₂ | 23° |
| α₃ | 17° |
| | 20° |
| | 29° |
| | 28° |
| | 27° |
| αₙ₋₁ | 30° |
| αₙ | 18° |
| αₙ₊₁ | 26° |
| | 19° |
| | 22° |
| | 16° |
| | 15° |
| | 24° |

Die unterschiedlichen Winkelabstände sind, wie der Tabelle entnommen werden kann, im dargestellten Beispiel unregelmässig auf alle Paare von Leitschaufeln verteilt. Alternativ könnten die Winkelabstände auch regelmässig in eine Umfangsrichtung zu- bzw. abnehmen, oder erst zu- und dann wieder abnehmen. Besonders vorteilhafte Ergebnisse können erzielt werden, wenn die Winkelabstände einer harmonischen Funktion, beispielsweise der Sinusfunktion, folgend grösser und kleiner werden.

In einer zweiten Ausführungsform gemäss Fig. 3 sind zwei Winkelabstände α₀ und α₁ auf die Paare von Leitschaufeln entlang dem Umfang alternierend verteilt. Die Werte für die einzelnen Winkelabstände der beispielhaft dargestellten Ausführungsform können wiederum der folgenden Tabelle entnommen werden:

**Tabelle 2 - Winkelabstände Fig. 3**

| | |
|---|---|
| α₀ | 25° |
| α₁ | 20° |

Weitere, nicht dargestellte Ausführungsformen sind ebenfalls möglich. Dabei können beispielsweise alle Winkelabstände bis auf einen oder einige wenige identisch sein. Es können Gruppen von identischen Winkelabständen gebildet werden. Diese Paarungen von Leitschaufeln mit identischen Winkelabständen können aneinander gereiht oder voneinander getrennt angeordnet sein.

Bei Diffusoren mit Leitschaufeln mit unterschiedlichen Winkelabständen konnte anhand von Messungen eine Reduktion der Resonanzschwingungen von bis zu 50 Prozent gegenüber einem regelmässig beschaufelten Diffusor nachgewiesen werden.

Optional können sich die einzelnen Leitschaufeln des Diffusors in Form, Länge, Eintritts- und Austrittswinkel sowie Eintritts- und Austrittsradius voneinander unterscheiden, um zusätzliche Ungleichheiten in den Diffusor einzubringen. Die unterschiedliche Ausbildung kann dabei sowohl in axialer Richtung (bezüglich der Verdichterachse), also in Richtung der Schaufelhöhe, wie auch in Umfangsrichtung erfolgen. Dabei können alle oder nur einige wenige Leitschaufeln unterschiedlich geformt oder angeordnet sein.

Solche erfindungsgemäss unregelmässig ausgebildete Diffusoren können in ein- oder mehrstufiger Form ausgebildet sein, wobei bei mehreren Stufen diese in radialer Richtung hintereinander, also konzentrisch bezüglich der Verdichterachse, angeordnet sind.

Der in Umfangsrichtung unregelmässig ausgebildete Diffusor ist bezüglich des in Umfangsrichtung asymmetrisch ausgebildeten Spiralgehäuses in einer fixen Winkellage positioniert. Zudem sind die Grösse der unterschiedlichen Winkelabstände sowie deren Verteilung entlang dem Umfang auf das asymmetrisch ausgebildete Spiralgehäuse (31) stromab der Leitschaufeln ausgerichtet. Die Winkelabstände können beispielsweise entlang dem Umfang analog zum Radius des Spiralgehäuses zunehmen. Oder dasjenige Leitschaufelpaar, welches im Bereich des Spiralzungenanfangs angeordnet ist, kann einen von den übrigen Leitschaufelpaaren unterschiedlichen Winkelabstand aufweisen.

Da sich das Spiralgehäuse (31) entlang dem Umfang in unterschiedlichen Winkellagen positionieren lässt, wird erfindungsgemäss mit Positionierungsmitteln sichergestellt, dass sich der Diffusor jeweils in der vorgesehenen Winkellage zum Spiralgehäuse befindet. Die vorgesehene Winkellage ist dabei vorteilhafterweise diejenige, bei welcher im Betrieb eine minimale Resonanzschwingung erzeugt wird. Diese Winkellage von Diffusor zum Spiralgehäuse mit minimaler Resonanzschwingungserzeugung kann optional errechnet oder experimentell bestimmt werden. Ein mögliches Positionierungsmittel ist in Fig. 2 angedeutet, mit einem Positionierungsnocken 23 an dem radial äusseren Rand der Diffusorwand 22, welcher in einer Positionierungsnut 33 im Spiralgehäuse eingreift. Andere formschlüssige Positionierungsmittel sind denkbar, etwa ein Positionierungsstift, welcher in beidseitig eingelassenen Bohrungen angeordnet ist. Auch die indirekte Positionierung über ein drittes Bauteil, etwa das Eintrittsgehäuse 32 oder das Lagergehäuse 30 sind denkbar.

### Bezugszeichenliste

- 10: Verdichterrad (Nabe)
- 11: Verdichterlaufschaufeln
- 12: Welle
- 21: Leitelement des Diffusors (Leitschaufel)
- 22: Wand des Diffusors
- 23: Positionierungsnocken
- 33: Lagergehäuse
- 31: Spiralgehäuse
- 32: Eintrittsgehäuse
- 33: Positionierungsnut
- αₓ: Winkelabstand zwischen zwei Diffusor-Leitschaufeln
- β_{A}: Austrittswinkel der Diffusor-Leitschaufel
- β_{E}: Eintrittswinkel der Diffusor-Leitschaufel
- r_{A}: Austrittsradius der Diffusor-Leitschaufel
- r_{E}: Eintrittsradius der Diffusor-Leitschaufel
- l: Länge der Diffusor-Leitschaufel

## Patentansprüche

1. Abströmbereich eines Radialverdichters, umfassend ein in Umfangsrichtung asymmetrisch ausgebildetes und in Umfangsrichtung in verschiedenen Winkellagen positionierbares Spiralgehäuse (31) sowie einen in Umfangsrichtung in verschiedenen Winkellagen positionierbaren, beschaufelten Diffusor mit mehreren, in Umfangsrichtung verteilt angeordneten Leitelementen (21), wobei sich der Winkelabstand (α₀) zweier benachbart zueinander angeordneter Leitelemente (21) unterscheidet vom Winkelabstand (α₁) zweier anderer benachbart zueinander angeordneter Leitelemente (21), **dadurch gekennzeichnet, dass** Mittel (23, 33) zur Positionierung des beschaufelten Diffusors bezüglich der Winkellage des asymmetrisch ausgebildeten Spiralgehäuses vorgesehen sind.

2. Abströmbereich eines Radialverdichters nach Anspruch 1, wobei mehrere Paare von jeweils benachbart zueinander angeordneten Leitelementen (21) einen anderen Winkelabstand aufweisen als die übrigen, jeweils benachbart zueinander angeordneten Leitelemente.

3. Abströmbereich eines Radialverdichters nach Anspruch 2, wobei mindestens zwei Paare von jeweils benachbart zueinander angeordneten Leitelementen einen ersten Winkelabstand (α₀) aufweisen und zumindest zwei andere Paare von jeweils benachbart zueinander angeordneten Leitelementen einen, vom ersten verschiedenen, zweiten Winkelabstand (α₁) aufweisen.

4. Abströmbereich eines Radialverdichters nach Anspruch 3, wobei mehrere Paare von jeweils benachbart zueinander angeordneten Leitelementen jeweils den gleichen Winkelabstand (α₀, α₁) aufweisen.

5. Abströmbereich eines Radialverdichters nach Anspruch 3 oder 4, wobei sich die Paare mit jeweils gleichen Winkelabständen aus unterschiedlichen Leitelementen zusammensetzen und beabstandet voneinander angeordnet sind.

6. Abströmbereich eines Radialverdichters nach Anspruch 2, wobei jedes Paar von benachbart zueinander angeordneten Leitelementen einen anderen Winkelabstand aufweist als die übrigen, jeweils benachbart zueinander angeordneten Leitelemente.

7. Abströmbereich eines Radialverdichters nach einem der Ansprüche 2 bis 6, wobei die Winkelabstände zwischen jeweils benachbart zueinander angeordneten Leitelementen einer harmonischen Funktion folgend entlang dem Umfang verteilt sind.

8. Abströmbereich eines Radialverdichters nach einem der vorangehenden Ansprüche, wobei sich zumindest ein Leitelement in der Länge (I) in Strömungsrichtung und/ oder in der Form unterscheidet von den anderen Leitelementen.

9. Abströmbereich eines Radialverdichters nach einem der vorangehenden Ansprüche, wobei zumindest ein Leitelement einen unterschiedlichen Eintritts- (β_{E}) und/ oder Austrittswinkel (β_{A}) und/ oder einen unterschiedlichen Eintritts- (r_{E}) und/ oder Austrittsradius (r_{A}) aufweist als die anderen Leitelemente.

10. Abgasturbolader, **gekennzeichnet durch** einen Radialverdichter mit einem Abströmbereich nach einem der vorangehenden Ansprüche.

## Claims

1. Discharge region of a centrifugal compressor, comprising a scroll casing (31) which is asymmetrically formed in the circumferential direction and can be positioned in different angular positions in the circumferential direction, and also a vaned diffuser which can be positioned in different angular positions in the circumferential direction, with a plurality of guide elements (21) which are arranged in a distributed manner in the circumferential direction, wherein the angular spacing (α₀) of two guide elements (21) which are arranged adjacently to each other differs from the angular spacing (α₁) of two other guide elements (21) which are arranged adjacently to each other, **characterized in that** means (23, 33) are provided for positioning the vaned diffuser with regard to the angular position of the asymmetrically formed scroll casing.

2. Discharge region of a centrifugal compressor according to Claim 1, wherein a plurality of pairs of guide elements (21) which are arranged adjacently to each other in each case have a different angular spacing than the remaining guide elements which are arranged adjacently to each other in each case.

3. Discharge region of a centrifugal compressor according to Claim 2, wherein at least two pairs of guide elements which are arranged adjacently to each other in each case have a first angular spacing (α₀) and at least two other pairs of guide elements which are arranged adjacently to each other in each case have a second angular spacing (α₁) which is different from the first.

4. Discharge region of a centrifugal compressor according to Claim 3, wherein a plurality of guide elements which are arranged adjacently to each other in each case have the same angular spacing (α₀, α₁) in each case.

5. Discharge region of a centrifugal compressor according to Claim 3 or 4, wherein the pairs with the same angular spacings in each case are assembled from different guide elements and arranged at a distance from each other.

6. Discharge region of a centrifugal compressor according to Claim 2, wherein each pair of guide elements which are arranged adjacently to each other has a different angular spacing than the remaining guide elements which are arranged adjacently to each other in each case.

7. Discharge region of a centrifugal compressor according to one of Claims 2 to 6, wherein the angular spacings between guide elements which are arranged adjacently to each other in each case are distributed along the circumference, following a harmonic function.

8. Discharge region of a centrifugal compressor according to one of the preceding claims, wherein at least one guide element differs in length (I) in the flow direction and/or in shape from the other guide elements.

9. Discharge region of a centrifugal compressor according to one of the preceding claims, wherein at least one guide element has a different inlet angle (β_{E}) and/or exit angle (β_{A}) and/or a different inlet radius (r_{E}) and/or exit radius (r_{A}) than the other guide elements.

10. Exhaust gas turbocharger, **characterized by** a centrifugal compressor with a discharge region according to one of the preceding claims.

## Revendications

1. Région d'écoulement d'un compresseur radial, comprenant un boîtier en spirale (31) réalisé de manière asymétrique dans la direction périphérique et pouvant être positionné dans la direction périphérique dans différentes positions angulaires ainsi qu'un diffuseur à aubes pouvant être positionné dans la direction périphérique dans différentes positions angulaires, avec plusieurs éléments directeurs (21) répartis dans la direction périphérique, la distance angulaire (α₀) entre deux éléments directeurs adjacents (21) étant différente de la distance angulaire (α₁) entre deux autres éléments directeurs adjacents (21), **caractérisée en ce que** des moyens (23, 33) sont prévus pour positionner le diffuseur à aubes par rapport à la position angulaire du boîtier en spirale réalisé de manière asymétrique.

2. Région d'écoulement d'un compresseur radial selon la revendication 1, dans laquelle plusieurs paires d'éléments directeurs respectivement adjacents (21) présentent une autre distance angulaire que le reste des éléments directeurs respectivement adjacents.

3. Région d'écoulement d'un compresseur radial selon la revendication 2, dans laquelle au moins deux paires d'éléments directeurs respectivement adjacents présentent une première distance angulaire (α₀) et au moins deux autres paires d'éléments directeurs respectivement adjacents présentent une deuxième distance angulaire (α₁) différente de la première.

4. Région d'écoulement d'un compresseur radial selon la revendication 3, dans laquelle plusieurs paires d'éléments directeurs respectivement adjacents présentent à chaque fois la même distance angulaire (α₀, α₁).

5. Région d'écoulement d'un compresseur radial selon la revendication 3 ou 4, dans laquelle les paires ayant à chaque fois des distances angulaires identiques se composent d'éléments directeurs différents et sont disposées à distance les unes des autres.

6. Région d'écoulement d'un compresseur radial selon la revendication 2, dans laquelle chaque paire d'éléments directeurs adjacents présente une autre distance angulaire que le reste des éléments directeurs respectivement adjacents.

7. Région d'écoulement d'un compresseur radial selon l'une quelconque des revendications 2 à 6, dans laquelle les distances angulaires entre des éléments directeurs respectivement adjacents sont réparties le long de la périphérie suivant une fonction harmonique.

8. Région d'écoulement d'un compresseur radial selon l'une quelconque des revendications précédentes, dans laquelle au moins un élément directeur se distingue des autres éléments directeurs de par sa longueur (I) dans la direction d'écoulement et/ou de par sa forme.

9. Région d'écoulement d'un compresseur radial selon l'une quelconque des revendications précédentes, dans laquelle au moins un élément directeur présente un angle d'entrée (β_{E}) et/ou un angle de sortie (β_{A}) et/ou un rayon d'entrée (r_{E}) et/ou un rayon de sortie (r_{A}) différents de ceux des autres éléments directeurs.

10. Turbocompresseur à gaz d'échappement, **caractérisé par** un compresseur radial comprenant une région d'écoulement selon l'une quelconque des revendications précédentes.
